(19) Europäisches Patentamt

European Patent Office

Office européen des brevets

(11) **EP 0 721 907 B1**

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(51) Int Cl.⁷: **B65H 23/02**

(21) Anmeldenummer: **95119889.4**

(22) Anmeldetag: **16.12.1995**

(54) **Ultraschall-Kantenfühler zur Erfassung der Bahnkante einer Warenbahn**

Ultrasonic edge sensor for detecting the edge of a material web

Détecteur de bord par ultra-sons pour la détection du bord d'une bande de matière

(84) Benannte Vertragsstaaten:
**DE GB IT**

(30) Priorität: **13.01.1995 DE 19500822**

(43) Veröffentlichungstag der Anmeldung:
**17.07.1996 Patentblatt 1996/29**

(73) Patentinhaber: **ERHARDT + LEIMER GmbH**
**D-86157 Augsburg (DE)**

(72) Erfinder:
• **Patel, Arvind Ishwarlal**
**Gujarat (IN)**

• **Alt, Gerhard**
**D-86507 Kleinaitingen (DE)**
• **Krauth, Wolfgang**
**D-86316 Friedberg-Wulfertshausen (DE)**
• **Seibold, Hans**
**D-86420 Anhausen (DE)**

(74) Vertreter: **Fay, Hermann, Dipl.-Phys. Dr. et al**
**Postfach 17 67**
**89007 Ulm (DE)**

(56) Entgegenhaltungen:
**DE-A- 3 442 154          US-A- 4 963 807**
**US-A- 5 072 414**

**Beschreibung**

Die Erfindung betrifft einen Ultraschall-Kantenfühler zur Erfassung der Kantenlage einer Warenbahn, mit mindestens zwei Ultraschallsensoren aus jeweils einem Sensorsender, der kurze Ultraschallwellenimpulse ausstrahlt, und einem Sensorempfänger, der die Ultraschallwellenimpulse aufnimmt, wobei jedem Sensor ein eigenes, von den Ultraschallwellenimpulsen auf ihrem Weg vom Sensorsender zum Sensorempfänger durchlaufenes Meßfeld zugeordnet ist und der Sensorempfänger aus den aufgenommenen Ultraschallwellenimpulsen jeweils ein vom Grad der Abdeckung seines Meßfelds durch die Warenbahn abhängendes elektrisches Sensorsignal bildet, und wobei eine Schalteinrichtung vorgesehen ist, die den Sensorsender und den Sensorempfänger jeweils nur eines der Sensoren einschaltet und zur Umschaltung zwischen den Sensoren steuerbar ist, ferner mit einem aus dem Sensorsignal des jeweils eingeschalteten Sensors ein digitales Empfangssignal bildenden Signalwandler, und mit einem Rechenwerk, das aus dem Empfangssignal ein der Kantenlage der Warenbahn zugeordnetes Fühlerausgangssignal berechnet, das zur Steuerung einer Bahnführungseinrichtung geeignet ist.

Derartige Kantenfühler dienen der berührungsfreien Erfassung der Kantenlage einer Warenbahn und sind besonders in Fällen geeignet, in denen die Warenbahn eine hohe optische Transparenz oder lichtempfindliche Oberfläche besitzt und daher optoelektrische Sensoren wenig geeignet sind. Aus US 5 072 414 ist ein Ultraschall-Kantenfühler mit den eingangs genannten Merkmalen bekannt. Er besitzt insgesamt zwei Ultraschallsensoren, von welchen nur einer im Kantenbereich der Warenbahn angeordnet ist und der Erfassung der Bahnkante dient. Der zweite Sensor befindet sich außerhalb des Kantenbereichs und dient zur Gewinnung von Kompensationsgrößen, um Änderungen der Umweltbedingungen, wie Lufttemperatur, Luftfeuchtigkeit usw. und deren Einfluß auf das vom ersten Sensor gelieferte Empfangssignal berücksichtigen und die Empfangssignale entsprechend normalisieren zu können. Die Empfangssignale und die Kompensationsgrößen werden aus den elektrischen Sensorsignalen durch Gleichrichtung, Spitzenwerterfassung und Digitalisierung gewonnen. Zwischen den zwei Sensoren wird mit dem als Multiplexer arbeitenden Schaltwerk umgeschaltet, um gegenseitige Schallbeeinflussungen zwischen den Sensoren zu vermeiden. Die Verarbeitung der Empfangssignale und der Kompensationsgrößen zum Fühlerausgangssignal erfolgt im Rechenwerk, und zwar unter Mittelung über jeweils eine Reihe von Empfangssignalen und Kompensationsgrößen. Die im Sensor ausgesandten und empfangenen Ultraschallwellensignale sind möglichst kurzzeitige Schallimpulse mit einer Schallfrequenz von etwa 200 kHz.

Aus der DE 34 42 154 C2 ist es bei einem ähnlichen Kantenfühler mit nur einem einzigen Ultraschallsensor zur Vermeidung von Meßstörungen durch Echosignale bekannt, den Sensorempfänger nur während einer bestimmten Zeitspanne zu aktivieren, die um die erwartete Laufzeit des Schallimpulses später als seine Aussendung beginnt und vor dem Eintreffen der ersten Echosignale endet. Im übrigen wird auch hier das elektrische Sensorsignal mit seinem Spitzenwert erfaßt.

Alle solche Kantenfühler haben den Nachteil, daß das Meßfeld, in dem in Breitenrichtung der Warenbahn die Kantenlage erfaßt werden kann, nur sehr schmal ist, was insbesondere dann gilt, wenn die Abhängigkeit des Fühlerausgangssignals von der Bahnkantenlage im Meßfeld möglichst linear sein soll.

Der Erfindung liegt die Aufgabe zugrunde, einen Ultraschall-Kantenfühler der eingangs genannten Art so auszubilden, daß der Bereich, in dem quer zur Breitenrichtung der Warenbahn die Bahnkantenlage erfaßt werden kann, nach Wunsch vergrößert und dabei die Abhängigkeit des Fühlerausgangssignals von der Bahnkantenlage auf einfache Weise linearisiert werden kann.

Diese Aufgabe wird nach der Erfindung bei einem Ultraschall-Kantenfühler mit den eingangs genannten Merkmalen dadurch gelöst,

a) daß das Meßfeld jedes Sensors in Breitenrichtung der Warenbahn durch zwei gedachte Randkantenlagen begrenzt ist, in welchen das Empfangssignal auf der einen Seite des Meßfelds einen maximalen und auf der anderen Seite einen minimalen Grenzwert besitzt, und daß die Sensoren eine gegenseitige räumliche Anordnung besitzen, in der diese Meßfelder in Breitenrichtung der Warenbahn lückenlos aneinander gereiht sind,

b) daß ein vorwärts und rückwärts zählendes Zählwerk vorgesehen ist, das mindestens so viele mögliche Zählerstände besitzt wie Sensoren vorhanden sind, wobei die Sensoren in der durch die Reihung ihrer Meßfelder bestimmten Reihenfolge den Zählerständen zugeordnet sind, und daß das Zählwerk die Schalteinrichtung für die Sensoren so steuert, daß der dem jeweiligen Zählerstand zugeordnete Sensor eingeschaltet ist,

c) daß eine Komparatorschaltung vorgesehen ist, die den sich für eine aktuelle Kantenlage ergebenden Wert des Empfangssignals mit den den Randkantenlagen des eingeschalteten Sensors zugeordneten Grenzwerten vergleicht und bei Überschreitung des maximalen bzw. Unterschreitung des minimalen Grenzwertes das Zählwerk vorwärts oder rückwärts auf denjenigen Zählerstand umschaltet, der dem in der Reihung der Meßfelder jeweils nächsten Sensor zugeordnet ist,

d) daß ein Eichdatenspeicher vorgesehen ist, in dem für das Empfangssignal in Abhängigkeit vom eingeschalteten Sensor und für das Fühlerausgangssignal Eichwerte gespeichert sind, die zu Eichkantenlagen gehören, welche für Eichzwecke ausgewählt und über die Meßfelder aller Sensoren verteilt sind, und

e) daß das Rechenwerk mit dem sich für eine aktuelle Kantenlage ergebenden Wert des Empfangssignals den aktuellen Wert des Fühlerausgangssignals aus den für den eingeschalteten Sensor gespeicherten Eichwerten errechnet.

Der durch die Erfindung erreichte Fortschritt ist zunächst darin zu sehen, daß bei der Reihung der Sensoren in Breitenrichtung der Warenbahn die Meßfelder der Sensoren aneinander anschließen und sich zu einem gemeinsamen Meßbereich für die Erfassung der Kantenlage zusammenfügen, dessen Größe durch entsprechende Anzahl der Sensoren nach Wunsch gewählt und erweitert werden kann. Da aber immer nur einer der Sensoren aktiviert ist und arbeitet, können sich die Sensoren untereinander nicht beeinträchtigen, und die Folgefrequenz, mit der die Messungen wiederholt werden können, bleibt so groß wie bei einem Kantenfühler mit nur einem einzigen Sensor. Ein weiterer wesentlicher Vorteil der Erfindung besteht darin, daß durch Vorgabe der Randkantenlagen für die Sensoren deren Meßfelder so weit beschränkt werden können, daß darin die Abhängigkeit des mit dem jeweiligen Sensor gewonnenen aktuellen Empfangssignals von der aktuellen Kantenlage durch eine Kennlinie gegeben ist, die zwischen den Randkantenlagen weitgehend linear verläuft, so daß sich die Meßempfindlichkeit bei der Erfassung der Bahnkante entsprechend wenig über das Meßfeld jedes einzelnen Sensors und damit über den gesamten Meßbereich des Kantenfühlers ändert. Da außerdem das Rechenwerk zu jedem aktuellen Wert des Empfangssignals den zugeordneten Wert des Fühlerausgangssignals aus den für den jeweils eingeschalteten Sensor gespeicherten Eichwerten, im einfachsten Fall durch lineare Interpolation errechnet, kann durch die Wahl und Vorgabe dieser Eichwerte die Abhängigkeit des Fühlerausgangssignals vom Empfangssignal und damit der Kennlinienverlauf des Kantenfühlers insgesamt nach Wunsch beeinflußt und insbesondere streng linearisiert werden, unabhängig davon, aus wie vielen Sensoren der Kantenfühler aufgebaut, wie groß also sein gesamter Meßbereich ist. Die Vorgabe und Eingabe der Eichwerte kann in sehr einfacher Weise derart erfolgen, daß im Kantenfühler mit Hilfe einer eine Warenbahn simulierenden Eichblende beliebige Kantenlagen als Eichkantenlagen eingestellt und der Wert des dazu jeweils gemessenen Empfangssignals sowie ein Wert des Fühlerausgangssignals, der dieser Kantenlage zugeordnet sein soll, als Eichwerte gespeichert werden, wobei für diese Zuordnung des Fühlerausgangssignals zur Eichkantenlage lediglich bestimmend ist, daß sich der gewünschte Kennlinienverlauf und Wertebereich des Fühlerausgangssignals ergibt.

Im einzelnen besteht die Möglichkeit, daß von den aneinander gereihten Meßfeldern der Sensoren jeweils nur ihre Randkantenlagen zusammenfallen. Dann kann sich aber die Gefahr ergeben, daß die Komparatorschaltung, welche über das Zählwerk die Schalteinrichtung für die Sensoren steuert, im Gebiet der für die Umschaltung maßgebenden Grenzwerte unsicher arbeitet; es kann ein mehrfaches Hin- und Herschalten zwischen den Sensoren erfolgen, wenn sich das Empfangssignal im Bereich der Grenzwerte nur geringfügig ändert. Dies kann bei den Empfangssignalen Schwierigkeiten bereiten, weil unter Umständen die von verschiedenen Sensoren stammenden Schallsignale vereinigt werden. Abhilfe schafft hier die Einführung einer Schalthysterese. Dazu empfiehlt es sich, die Anordnung so zu treffen, daß sich die aneinander gereihten Meßfelder jeweils paarweise überschneiden. Zweckmäßigerweise sind dabei die Randkantenlagen für jeden Sensor zugleich Eichkantenlagen und daher die zugehörigen Eichwerte des Empfangssignals gleich den für die Sensorumschaltung maßgeblichen Grenzwerten, so daß die Grenzwerte keiner eigenen Vorgabe und Speicherung bedürfen. Jedoch bedingt dies, daß für jede Meßfeldüberschneidung zwei, nämlich den Überschneidungsbereich beidseits begrenzende, den Randkantenlagen entsprechende Eichkantenlagen benötigt werden, was für den Arbeitsaufwand beim Eichvorgang des Kantenfühlers nachteilig ist. Eine diesen Nachteil vermeidende und daher besonders bevorzugte Ausführungsform der Erfindung ist dadurch gekennzeichnet, daß sich in jedem Überschneidungsbereich der Meßfelder nur eine Eichkantenlage befindet, zu der zwei Eichwerte des Empfangssignals gehören, nämlich je eines für die beiden Sensoren, die den sich überschneidenden Meßfeldern zugeordnet sind, und daß diese zwei Eichwerte die Vergleichsgrößen bilden, mit denen je nach eingeschaltetem Sensor die Komparatorschaltung das aktuelle Empfangssignal vergleicht, wobei die Komparatorschaltung eine Schalthysterese besitzt, so daß die für die Sensorumschaltung maßgeblichen Grenzwerte sich um jeweils ein Hystereseintervall von den Eichwerten unterscheiden, also der maximale Grenzwert um das Hystereseintervall größer und der minimale Grenzwert um das Hystereseintervall kleiner als der jeweilige Eichwert ist. Als Hystereseintervall genügen Signalunterschiede von etwa 1 % des maximal möglichen Wertes des Empfangssignals.

Im Prinzip kann jedem Grenzwert eine eigene Komparatoreinheit zugeordnet werden, die das Empfangssignal dann allerdings nur mit diesem Grenzwert vergleichen kann, was einen entsprechend großen Schaltungsaufwand für die Komparatorschaltung bedingt, die doppelt so viele Komparatoreinheiten benötigen würde wie Meßfeldüberschneidungen vorhanden sind. Jedoch kann solcher Aufwand im Rahmen der Erfindung unschwer vermieden werden. Eine dazu bevorzugte Ausführungsform ist erfindungsgemäß dadurch gekennzeichnet, daß die Komparatorschaltung nur zwei Komparatoreinheiten mit jeweils zwei Eingängen und einem Ausgang aufweist, daß der eine Eingang jeder Komparatoreinheit mit dem aktuellen Empfangssignal beaufschlagt ist und dem jeweils anderen Eingang einer der Eichwerte des Empfangssignals aus dem Eichdatenspeicher aufschaltbar ist, wobei die beiden jeweils aufgeschalteten Eichwerte zu in der Reihung der Meßfelder aufeinander folgenden Eichkantenlagen des jeweils eingeschalteten Sensors gehören, und daß die Ausgänge der beiden Komparatoreinheiten über Gatterbausteine verknüpft sind, die das Zählwerk vor- und zurückstellen, wenn das aktuelle Empfangssignal größer als der größere oder kleiner als der kleinere der beiden jeweils aufgeschalteten Eichwerte ist. Vorzugsweise ist ein weiterer, die Ausgänge der Komparatoreinheiten verknüpfender Gatterbaustein vorgesehen, der ein das Rechenwerk freischaltendes Signal generiert, wenn das aktuelle Empfangssignal im Intervall zwischen den beiden jeweils aufgeschalteten Eichwerten liegt. Denn dann braucht das Rechenwerk nur darauf ausgelegt zu sein, mit jeweils nur denjenigen Eichwerten für das Empfangssignal und Fühlerausgangssignal zu rechnen, die den Intervallgrenzen zugeordnet sind, was den Rechneraufbau entsprechend vereinfacht.

Eine weiter bevorzugte Ausführungsform der Erfindung ist dadurch gekennzeichnet, daß das Zählwerk einen von den Gatterbausteinen unmittelbar geschalteten ersten Vor-/Rückwärtszähler und einen davon geschalteten zweiten Vor-/Rückwärtszähler aufweist, von welchen der erste Zähler so viele Zählerstände besitzt wie je Sensor Eichkantenlagen vorhanden sind, die gemäß ihrer Reihenfolge im Meßfeld den Zählerständen zugeordnet sind, und der zweite Zähler mit seinen Zählerständen die Schalteinrichtung für die Sensoren steuert, wobei der erste Zähler bei Überschreitung der Zählerstandsgrenzen sich selbst zurücksetzt und den zweiten Zähler um jeweils einen Zählerstand weiterschaltet, und wobei im übrigen beide Zähler gemäß ihren Zählerständen einen Adressdecoder für den Eichdatenspeicher steuern. Das Zählwerk steuert dann im Ergebnis nicht nur die Schalteinrichtung für die Sensoren und bestimmt damit den jeweils eingeschalteten Sensor, sondern steuert auch den Zugriff der Komparatorschaltung und des Rechenwerks auf die im Eichdatenspeicher gespeicherten Eichwerte. Vorzugsweise ist jedem Sensor dieselbe Anzahl von Eichkantenlagen zugeordnet, was mit dem Vorteil verbunden ist, daß der erste Zähler im Zählwerk nur einmal vorhanden zu sein braucht, denn für jeden Sensor ist dann die Anzahl der Zählerstände gleich groß und es genügt, den ersten Zähler beim Übergang zwischen den Sensoren entsprechend umzuschalten. Sind dagegen Sensoren mit abweichender Anzahl von Eichkantenlagen vorhanden, müssen für diese Sensoren jeweils eigene erste Zähler mit einer dieser Anzahl von Eichkantenlagen entsprechenden Anzahl von Zählerständen vorgesehen werden; und die Ausgänge dieser ersten Zähler sind so zu verknüpfen, daß sie den allen ersten Zählern gemeinsamen zweiten Zähler zu steuern vermögen.

Im übrigen empfiehlt es sich, daß im Eichdatenspeicher für jeden Sensor und jede Eichkantenlage Eichwerte für einen Proportionalitätsfaktor gespeichert sind, die den den Eichkantenlagen entsprechenden Eichwerten für das Empfangs- bzw. Fühlerausgangssignal zugeordnet sind, und daß sich für eine aktuelle Kantenlage der Wert S des Fühlerausgangssignals aus dem Wert W des Empfangssignals nach den Gleichungen

$$S = S_{k,n} + m_{k,n} * (W_{k,n} - W)$$

$$m_{k,n} = \frac{S_{k,n+1} - S_{k,n}}{W_{k,n+1} - W_{k,n}}$$

errechnet, worin $W_{k,n}, S_{k,n}$ und $W_{k,n+1}, S_{k,n+1}$ für den k-ten Sensor die Eichwerte für das Empfangs- bzw. Fühlerausgangssignal in der n-ten und (n+1)-ten Eichkantenlage und $m_{k,n}$ den den Eichwerten $W_{k,n}$, $S_{k,n}$ zugeordneten Eichwert des Proportionalitätsfaktors bedeuten. Es genügen dann nur wenige Rechenglieder für das Rechenwerk, nämlich ein die Differenz $(W_{k,n} - W)$ bildendes Subtrahierglied, ein das Produkt $m_{k,n} (W_{k,n} - W)$ bildendes Multiplizierglied und ein die Summe $S_{k,n} + m_{k,n} * (W_{k,n} - W)$ bildendes Addierglied. Die Eichwerte $m_{k,n}$ des Proportionalitätsfaktors werden beim Eichvorgang des Kantenfühlers aus den mit Hilfe der Eichblende bereits ermittelten und gespeicherten Eichwerten für das Empfangssignal und das Fühlerausgangssignal berechnet und gespeichert. Es besteht aber bei entsprechender Auslegung des Rechenwerks auch die Möglichkeit, die Eichwerte $m_{k,n}$ bei jedem aktuellen Meßvorgang jeweils neu aus den Eichwerten $W_{k,n}, S_{k,n}$ zu berechnen, welche für diejenige Eichkantenlage gelten, die der jeweils aktuellen Kantenlage zugeordnet und durch die Zählerstände des Zählwerks bestimmt ist.

Im übrigen empfiehlt es sich, Exemplarstreuungen zwischen den Sensoren möglichst auszugleichen. Eine dafür im Rahmen der Erfindung bevorzugte Möglichkeit ist dadurch gekennzeichnet, daß für die Senderspannung der Sensoren ein Spannungsgenerator vorgesehen ist, bei dem die Größe der erzeugten Senderspannung verstellbar und auf eine für jeden Sensor eigene Eichspannung einstellbar ist, mit der die von den Sensoren bei freiem Meßfeld erzeugten Empfangssignale jeweils gleich groß sind, und daß mit den Sensoren zugleich deren Eichspannungen umschaltbar sind.

Im folgenden wird die Erfindung an einem in der Zeichnung dargestellten Ausführungsbeispiel näher erläutert; es zeigen:

Fig. 1   die Ansicht des Meßkopfes eines Kantenfühlers, gesehen in Laufrichtung der zu überwachenden Warenbahn, teils im Schnitt,

Fig. 2 den Grundriss eines der Ultraschallschwinger des Meßkopfes nach Fig. 1 in vergrößerter Darstellung,

Fig. 3 ein Detail aus Fig. 2 in nochmals stärkerer Vergrößerung,

Fig. 4 ein Blockschaltbild des Kantenfühlers in stark vereinfachter Darstellung,

Fig. 5 ein Kennliniendiagramm zur Erläuterung der Funktionsweise des Kantenfühlers,

Fig. 6 ein Blockschaltbild der für das Verständnis der Erfindung wesentlichen Teile des zum Kantenfühler gehörenden Prozessors,

Fig. 7 ein Funktionsschaltbild des Kantenfühlers in gegenüber Fig. 6 vollständigerer Darstellung, und

Fig. 8 ein Zeitdiagramm zur Erläuterung des zeitlichen Meßablaufs des Kantenfühlers.

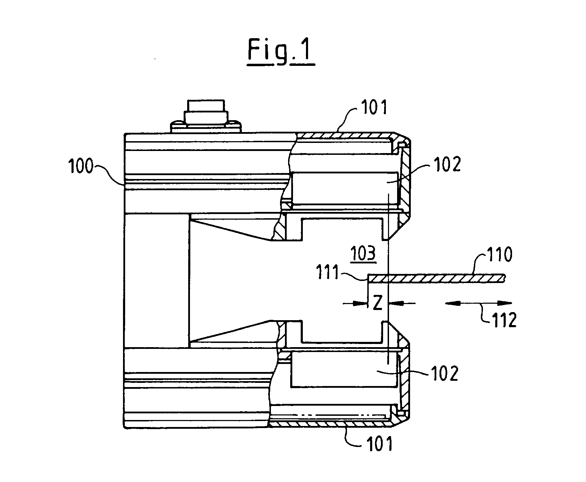

Der aus der Zeichnung ersichtliche Ultraschall-Kantenfühler besitzt einen in Fig. 1 für sich allein dargestellten Meßkopf 100 in Form eines etwa U-förmigen Bügels mit an den Enden der Bügelschenkel 101 angeordneten Ultraschall-Schwingern 102, von welchen der eine als Ultraschall-Sender, der andere als Ultraschall-Empfänger arbeitet. Beide Schwinger 102 stehen sich über den zwischen den Bügelschenkeln 101 gebildeten Meßspalt 103 hinweg mechanisch gegenüber und bilden zwischen sich eine Schallstrecke, die von den Ultraschallwellen auf ihrem Weg vom Ultraschall-Sender zum Ultraschall-Empfänger durchlaufen wird. Eine Warenbahn 110 steht mit ihrer Bahnkante 111 in den Meßspalt 103 vor. Ändert sich die Lage der Bahnkante 111 in Breitenrichtung der Warenbahn (Pfeil 112), werden dadurch die Ultraschallwellen in der Schallstrecke mehr oder weniger beeinflußt, was zur Detektion der Kantenlage benutzt wird.

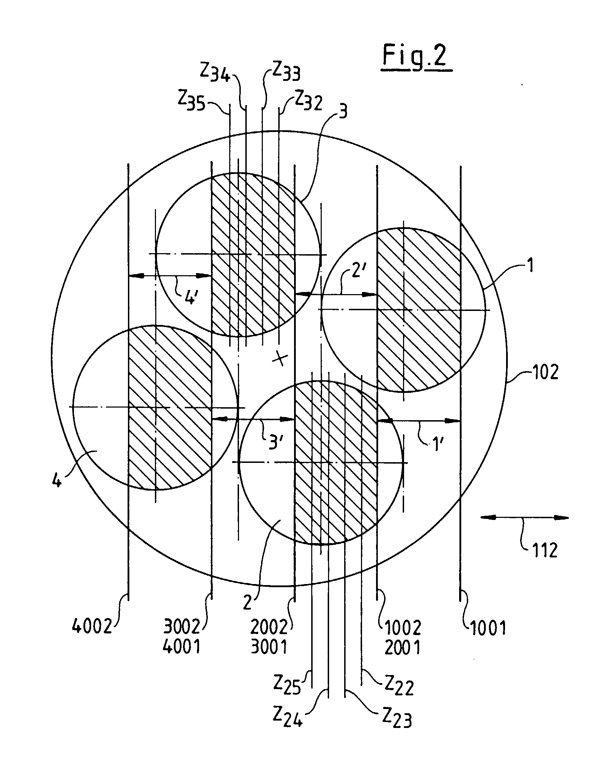

Die Schallschwinger 102 besitzen entsprechend der vergrößerten Darstellung in Fig. 2 mehrere, im Ausführungsbeispiel vier, im Querschnitt kreisrunde Ultraschall-Sensoren 1, 2, 3, 4 aus jeweils Sensorsender 1.1, 2.1, 3.1, 4.1 und Sensorempfänger 1.2, 2.2, 3.2, 4.2, wobei die Sensorsender gemeinsam im einen, die Sensorempfänger gemeinsam im anderen der beiden Ultraschallschwinger 102 angeordnet sind und jeder Sensorempfänger 1.2, 2.2, 3.2, 4.2 dem ihm jeweils zugeordneten Sensorsender 1.1, 2.1, 3.1, 4.1 am Meßspalt 103 gegenübersteht. Die gegenseitige Anordnung der Sensoren 1, 2, 3, 4 ist aus Fig. 2 ersichtlich. Jedem Sensor ist ein eigenes Meßfeld 1', 2', 3', 4' in der Schallstrecke zugeordnet. Diese Meßfelder sind in Fig.

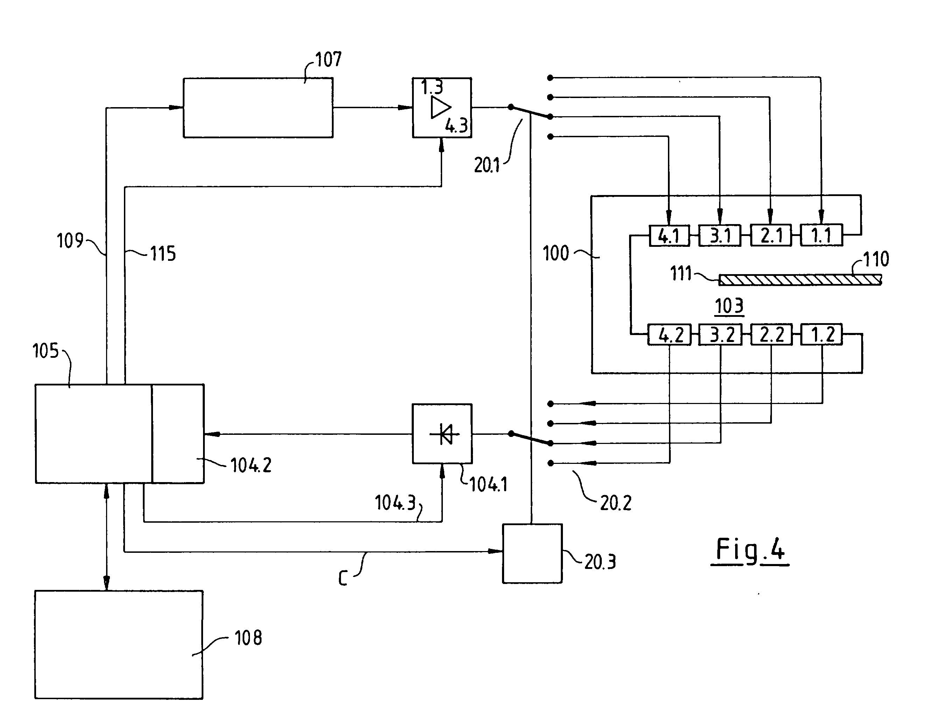

2 durch Schraffuren kenntlich gemacht. Dem im Meßspalt 103 äußersten Sensor 1 ist das Meßfeld 1', den nächstfolgenden Sensoren 2 und 3 das Meßfeld 2' bzw. 3' und dem innersten Sensor 4 das Meßfeld 4' zugeordnet. Die Sensorsender 1.1, 2.1, 3.1, 4.1 (Fig. 4) senden jeweils sehr kurze Ultraschallwellenimpulse aus. Die zugeordneten Sensorempfänger 1.2, 2.2, 3.2, 4.2 bilden aus den jeweils in ihrem Meßfeld 1', 2', 3', 4' aufgenommenen Ultraschallwellenimpulsen elektrische Sensorsignale, die vom Grad der Abdeckung des Meßfelds 1', 2', 3', 4' durch die Warenbahn 110 abhängen. Eine in der Zeichnung allgemein mit 20 bezeichnete, als Multiplexer arbeitende Schalteinrichtung schaltet jeweils immer nur einen der Sensorsender 1.1 bis 4.1 und nur den jeweils dazu gehörenden Sensorempfänger 1.2 bis 4.2 ein, wobei die Einschaltung der Sensorsender 1.1 bis 4.1 durch den Schaltteil 20.1 und der Sensorempfänger 1.2 bis 4.2 durch den Schaltteil 20.2 erfolgt. Die Schalteinrichtung 20 mit den beiden Schaltteilen 20.1, 20.2 kann zur Umschaltung zwischen den Sensoren 1 bis 4 gesteuert werden, was noch im einzelnen beschrieben wird.

Das elektrische Sensorsignal des jeweils vom Schaltteil 20.2 eingeschalteten, in Fig. 4 also des dritten Sensorempfängers 1.2 bis 4.2 wird in einem Signalwandler 104 zu einem mit W bezeichneten Empfangssignal umgeformt, nämlich zunächst analog aufbereitet und dann digitalisiert, wobei zur analogen Aufbereitung ein Spitzenwertgleichrichter 104.1 und zur Digitalisierung des daraus erhaltenen Signalspitzenwerts ein A/D-Wandler 104.2 vorgesehen sind. Der Spitzenwertgleichrichter 104.1 kann über eine Leitung 104.3 von einem Prozessor 105 aktiviert oder inaktiviert werden, so daß er nur eine vorgegebene Zeitspanne vom Zeitpunkt des Empfangs des Ultraschallwellenimpulses an arbeitet.

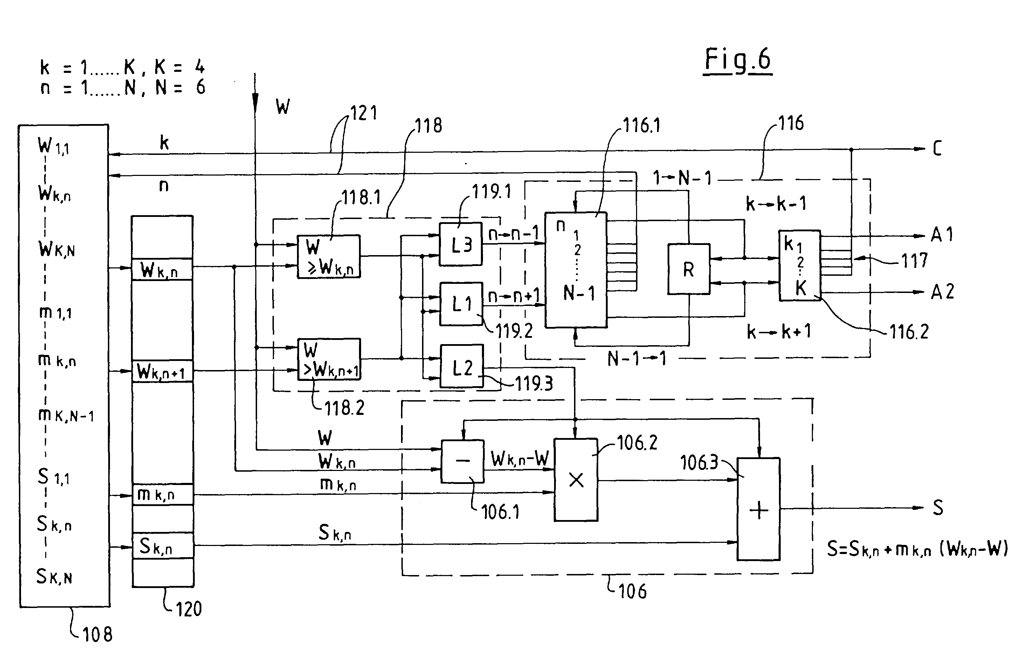

In dem Prozessor 105 befindet sich ein aus Fig. 6 näher ersichtliches Rechenwerk 106, das aus dem digitalisierten Empfangssignal W ein der Kantenlage zugeordnetes Fühlerausgangssignal S berechnet, das zur Steuerung einer selbst nicht dargestellten Bahnführungseinrichtung verwendet wird, die zusammen mit dem Kantenfühler einen geschlossenen Regelkreis für die Kantenlage der Warenbahn bildet.

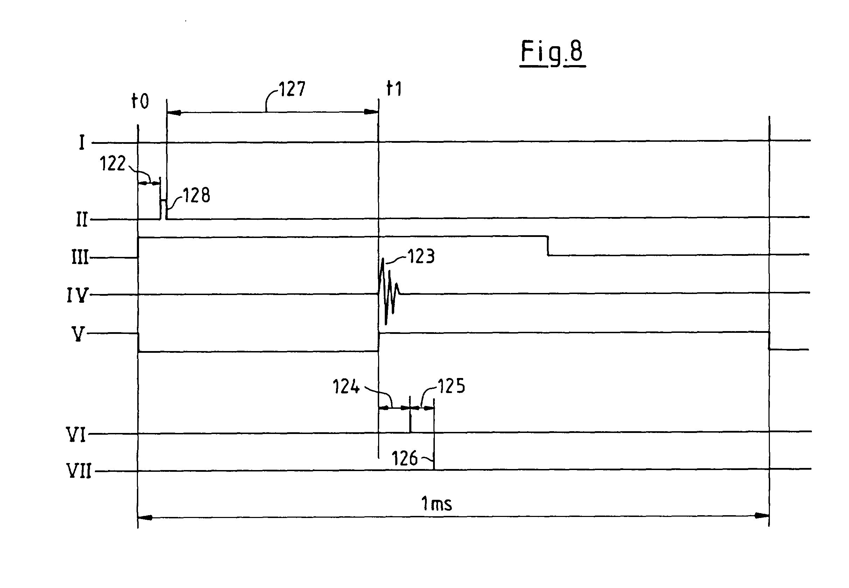

Um Exemplarstreuungen bei den Sensoren 1 bis 4 auszugleichen, ist zur Erzeugung ihrer Senderspannung ein Spannungsgenerator 107 vorgesehen, bei dem die Größe der erzeugten Senderspannung verstellbar und auf eine für jeden Sensor 1 bis 4 eigene Eichspannung einstellbar ist. Die Größe dieser Eichspannungen bestimmt sich daraus, daß jeder Sensor 1 bis 4 mit der ihm eigenen Eichspannung bei freiem Meßspalt 103 gleich große Empfangssignale W ergibt. Im einzelnen werden dazu in einem automatischen Abgleichlauf bei vollständig freiem Meßspalt 103 die Sensoren 1 bis 4 mit den Schaltteilen 20.1 und 20.2 der Reihe nach durchgeschaltet und die einzelnen Senderspannungen für jeden Sensor so lange verändert, bis sich gleich große Empfangssignale W am Ausgang des A/D-Wandlers 104.2 ergeben. Die so ermittelten Eichspannungen für die Sensoren werden in einem Eichdatenspeicher 108 gespeichert. Wird dann später bei der Erfassung der Kantenlage zwischen den Sensoren umgeschaltet, so erfolgt über eine Steuerleitung 109 eine entsprechende Umschaltung der Senderspannung, so daß jeder Sensor immer nur mit der ihm zugeordneten Eichspannung betrieben wird. Dabei kann zwar, wie in Fig. 6, die Kapazität aller Sensorsender 1.1 bis 4.1 über eine Versorgungsleitung 114 jeweils auf dieselbe Senderspannung aufgeladen werden, jedoch muß diese Senderspannung die Größe der Eichspannung des aktuellen Sensors besitzen. Soll zu einem anderen Sensor übergegangen werden, muß zuvor die Senderspannung auf dessen Eichwert geändert werden. Die Einschaltung der Sensorsender 1.1 bis 4.1 erfolgt dadurch, daß die Kapazität des jeweils aktuellen Sensorsenders durch einen für jeden einzelnen Sensorsender vorgesehenen Booster 1.3 bis 4.3 entladen und dadurch der Ultraschallwellenimpuls ausgelöst wird. Dazu liefert der Prozessor 105 über die Leitungen 115 einen 5 μs breiten Impuls 128 (Fig. 8) für den jeweiligen Booster 1.3 bis 4.3.

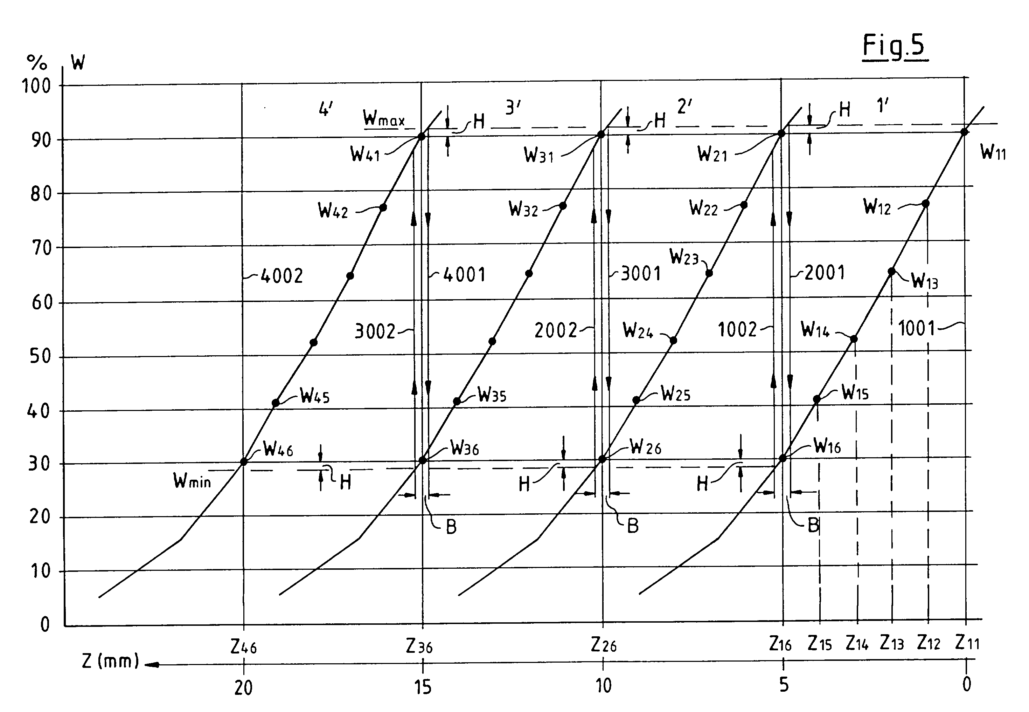

Die Abhängigkeit der durch den beschriebenen Abgleichlauf normierten Empfangssignale von der Kantenlage z und dem jeweils eingeschalteten Sensor 1 bis 4 ist in Fig. 5 dargestellt, wobei der Wert z=0 an die Stelle des rechten Randes 1001 des Meßfelds 1' in Fig. 2 gelegt ist. Im übrigen ergibt sich die Bedeutung von z aus der Fig. 1. Es ist der Abstand, um den die Bahnkante 111 vom Meßfeldrand 1001 aus nach innen in den Meßspalt 103 hinein vorsteht. Das Meßfeld 1' erstreckt sich somit in Fig. 5 zwischen z=0 und Z=5 mm, das Meßfeld 2' zwischen z=5 mm und 10 mm, das Meßfeld 3' zwischen z=10 mm und 15 mm und das Meßfeld 4' zwischen z=15 mm und 20 mm. Diese Zuordnung ist in der obersten Reihe des Diagramms nach Fig. 5 durch die Angaben 1' bis 4' angedeutet.

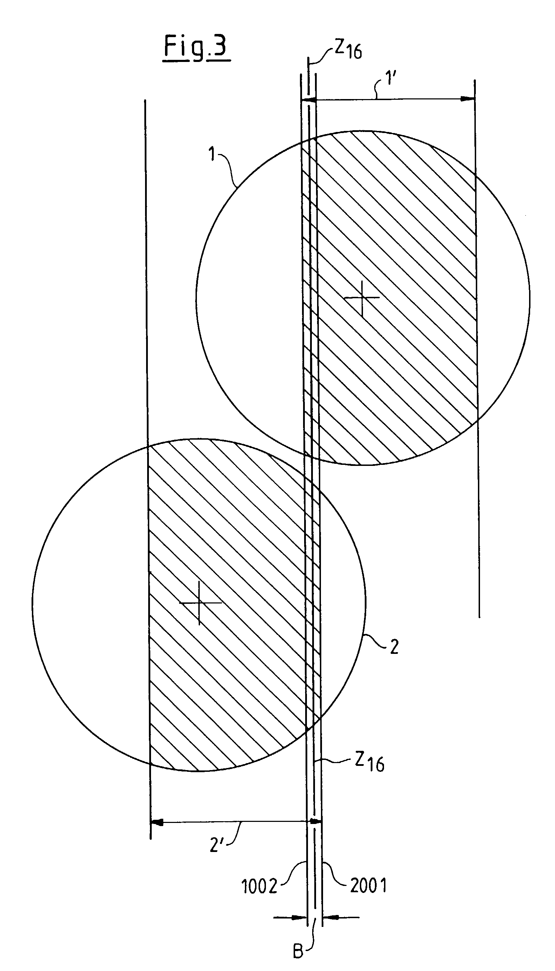

Das Meßfeld 1' bis 4' jedes Sensors 1 bis 4 ist durch jeweils zwei gedachte Randkantenlagen 1001, 1002, bzw. 2001, 2002, bzw. 3001, 3002 und 4001, 4002 begrenzt, womit genauer gemeint ist, daß die Sensoren jeweils nur innerhalb dieser Begrenzung ihres Meßfelds für die Messung aktueller Kantenlagen benutzt werden. In der vereinfachten Darstellung der Fig. 2 fallen die Randkantenlagen 1002, 2001 usw. benachbarter Meßfelder 1', 2' bzw. 2', 3' und 4' scheinbar zusammen. In Wirklichkeit aber überschneiden sich die Randkantenlagen geringfügig, wie dies in der vergrößerten Darstellung der Fig. 3 am Beispiel der Meßfelder 1' und 2' deutlich wird. Die Überschneidung ist mit B bezeichnet. Diese Überschneidungen sind in Fig. 5 übertrieben dargestellt. Im Ergebnis sind die durch ihre Randkantenlagen 1001 bis 4002 begrenzten Meßfelder 1' bis 4' in Breitenrichtung der Warenbahn 110 (Pfeil 112) lückenlos aneinander gereiht. In der jeweils rechten Randkantenlage 1001 bis 4001 besitzt das Empfangssignal W einen maximalen Grenzwert Wmax, in der linken Randkantenlage 1002 bis 4002 einen minimalen Grenzwert Wmin.

Die Messung der aktuellen Lage der Bahnkante 111 erfolgt immer nur durch einen einzigen Sensor 1 bis 4, nämlich durch denjenigen, in dessen Meßfeld 1' bis 4' die Bandkante 111 jeweils liegt. Verlagert sich die Bandkante 111 von einem Meßfeld in eines der beiden jeweils benachbarten, wird von der Schalteinrichtung 20 auf den entsprechend anderen Sensor umgeschaltet. Diese Umschaltung wird mit Hilfe eines vor- und rückwärts zählenden Zählwerks 116 (Fig. 6) gesteuert, das für jeden Sensor 1 bis 4 über einen eigenen Zählerstand verfügt, wobei die Sensoren 1 bis 4 in der durch die Reihung ihrer Meßfelder 1' bis 4' gegebenen Reihenfolge den Zählerständen zugeordnet sind. Diesen Zählerständen entsprechen vier Zählerausgänge 117, über die das Zählwerk 116 die Schalteinrichtung 20 so steuert, daß der dem jeweiligen Zählerstand, also dem jeweiligen Zählerausgang 117, zugeordnete Sensor eingeschaltet ist. Das Zählwerk 116 wiederum wird von einer Komparatorschaltung 118 gesteuert, die den sich für eine aktuelle Kantenlage ergebenden Wert W des Empfangssignals mit den den Randkantenlagen des eingeschalteten Sensors 1 bis 4 zugeordneten Grenzwerten Wmax und Wmin vergleicht. Bei Überschreitung des maximalen Grenzwerts Wmax bzw. Unterschreitung des minimalen Grenzwerts Wmin schaltet das Zählwerk 116 vorwärts oder rückwärts auf denjenigen Zählerstand (Ausgänge 117), der dem in der Reihung der Meßfelder 1' bis 4' jeweils nächsten Sensor 1 bis 4 zugeordnet ist.

Im Eichdatenspeicher 108 sind für das Empfangssignal in Abhängigkeit vom eingeschalteten Sensor (k = 1 bis 4) Eichwerte $W_{1,1}$, $W_{1,2}$, ... $W_{k,n}$ ... $W_{4,5}$, $W_{4,6}$ gespeichert, die in Fig. 5 durch Punkte angedeutet sind und zu Eichkantenlagen $z_{k,n}$ (n = 1 bis 6) gehören, die äquidistant die Meßfelder 1' bis 4' in im Ausführungsbeispiel fünf gleich breite Streifen unterteilen und der Einfachheit wegen in Fig. 2 nur in den Meßfeldern 2' und 3' als $z_{2,2}$, $z_{2,3}$ bis $z_{2,6}$ bzw. $z_{3,2}$ bis $z_{3,6}$ und in Fig. 5 nur im Meßfeld 1' als $z_{1,1}$, $z_{1,2}$ bis $z_{1,6}$ eingetragen sind. Je eine dieser Eichkantenlagen, nämlich $z_{1,6}$, $z_{2,6}$ und $z_{3,6}$ befindet sich in jedem Überschneidungsbereich B zweier Meßfelder 1', 2' bzw. 2', 3' und 3', 4'. Zu diesen letzteren Eichkantenlagen $z_{1,6}$, $z_{2,6}$ und $z_{3,6}$ gehören je zwei Eichwerte des Empfangssignals W, nämlich je einer für die beiden Sensoren, die den sich überschneidenden Meßfeldern zugeordnet sind. Im einzelnen sind dies bei der Eichkantenlage $z_{1,6}$ der Eichwert $W_{1,6}$ für den Sensor 1 und der Eichwert $W_{2,1}$ für den Sensor 2, bei der Eichkantenlage $z_{2,6}$ der Eichwert $W_{2,6}$ für den Sensor 2 und $W_{3,1}$ für den Sensor 3 und bei der Eichkantenlage $z_{3,6}$ der Eichwert $W_{3,6}$ für den Sensor 3 und der Eichwert $W_{4,1}$ für den Sensor 4. Alle diese Eichwerte werden in einem Eichlauf dadurch gewonnen, daß anstelle einer Warenbahn eine sie simulierende Eichblende im Meßspalt 103 in Richtung des Pfeiles 112 schrittweise so verschoben wird, daß sich die der Bahnkante entsprechende Blendenkante nacheinander an den ausgewählten Eichkantenlagen $z_{k,n}$ befindet. In jeder dieser Eichkantenlagen bildet der sich einstellende Wert $W_{k,n}$ des Empfangssignals den entsprechenden Eichwert, der gespeichert wird. Dieser Eichlauf läuft automatisiert ab.

Im Eichdatenspeicher 108 sind außerdem zu jeder Eichkantenlage digitale Eichwerte $S_{1,1}$, $S_{1,2}$ ... $S_{k,n}$ ..., $S_{4,6}$ für das Fühlerausgangssignal S gespeichert. Die Zuordnung dieser Eichwerte $S_{k,n}$ zu den Eichkantenlagen $z_{k,n}$ richtet sich nach der für das Fühlerausgangssignal gewünschten Abhängigkeit von der Kantenlage, nach dessen insgesamt gewünschtem Wertebereich und/oder nach dessen gewünschter Nullpunktlage, wobei zumeist eine lineare Proportionalität des Fühlerausgangssignals mit der Kantenlage gewählt werden wird, aber nicht gewählt werden muß.

Aus diesen gespeicherten Eichwerten $W_{k,n}$, $S_{k,n}$ errechnet das Rechenwerk 106 mit dem sich für eine aktuelle Kantenlage $z_{k,n}$ in Abhängigkeit vom eingeschalteten Sensor k ergebenden Wert W des Empfangssignals den Wert S des aktuellen Fühlerausgangssignals, was später genauer beschrieben wird.

Es wurde bereits erwähnt, daß jeder Eichkantenlage $z_{k,6}$ (k = 1 bis 3), die innerhalb einer Meßfeldüberschneidung B liegt, zwei Eichwerte für das Empfangssignal zugeordnet sind. Diese je zwei Eichwerte $W_{1,6}$, $W_{2,1}$; $W_{2,6}$, $W_{3,1}$; $W_{3,6}$, $W_{4,1}$ bilden, außer ihrer Funktion für die Berechnung des aktuellen Fühlerausgangssignals, im Ausführungsbeispiel auch die Vergleichsgrößen, mit denen je nach eingeschaltetem Sensor die Komparatorschaltung 118 das aktuelle Empfangssignal W vergleicht. Die Komparatorschaltung besitzt dabei eine Schalthysterese, so daß die für die Sensorumschaltung maßgeblichen Grenzwerte Wmax, Wmin sich um jeweils ein Hystereseintervall H von den Eichwerten unterscheiden, also der maximale Grenzwert Wmax um das Hystereseintervall H größer, der minimale Grenzwert Wmin um das Hystereseintervall H kleiner als der jeweilige Eichwert $W_{1,1}$, $W_{2,1}$, $W_{3,1}$, $W_{4,1}$ bzw. $W_{1,6}$, $W_{2,6}$, $W_{3,6}$, $W_{4,6}$ ist. Im einzelnen besitzt die Komparatorschaltung 118 nur zwei Komparatoreinheiten 118.1, 118.2 mit jeweils zwei Eingängen und einem Ausgang. Der eine, in Fig. 6 obere Eingang jeder Komparatoreinheit 118.1, 118.2 ist mit dem aktuellen Empfangssignal W beaufschlagt. Dem jeweils anderen Eingang ist einer der beiden Eichwerte $W_{k,n}$ und $W_{k,n+1}$ des Empfangssignals aus dem Eichdatenspeicher 108 aufschaltbar. Die beiden jeweils aufgeschalteten Eichwerte $W_{k,n}$ und $W_{k,n+1}$ gehören zu aufeinander folgenden Eichkantenlagen $z_{k,n}$, $z_{k,n+1}$ (n = 1 bis 5) des jeweils eingeschalteten Sensors k (k = 1 bis 4). Die Ausgänge der beiden Komparatoreinheiten 118.1 und 118.2 sind über Gatterbausteine 119.1, 119.2 verknüpft, von welchen der Gatterbaustein 119.1 das Zählwerk 116 zurück- und der andere Gatterbaustein 119.2 vorstellt, wenn das aktuelle Empfangssignal W größer als der größere bzw.

kleiner als der kleinere der beiden jeweils aufgeschalteten Eichwerte $W_{k,n}$, $W_{k,n+1}$ ist. Ein weiterer, die Ausgänge der Komparatoreinheiten 118.1, 118.2 verknüpfender Gatterbaustein 119.3 erzeugt ein das Rechenwerk 106 freischaltendes Signal, wenn das aktuelle Empfangssignal W im Intervall zwischen den beiden aufgeschalteten Eichwerten $W_{k,n}$, $W_{k,n+1}$ liegt und daher mit diesen Eichwerten das aktuelle Fühlerausgangssignal zu errechnen ist.

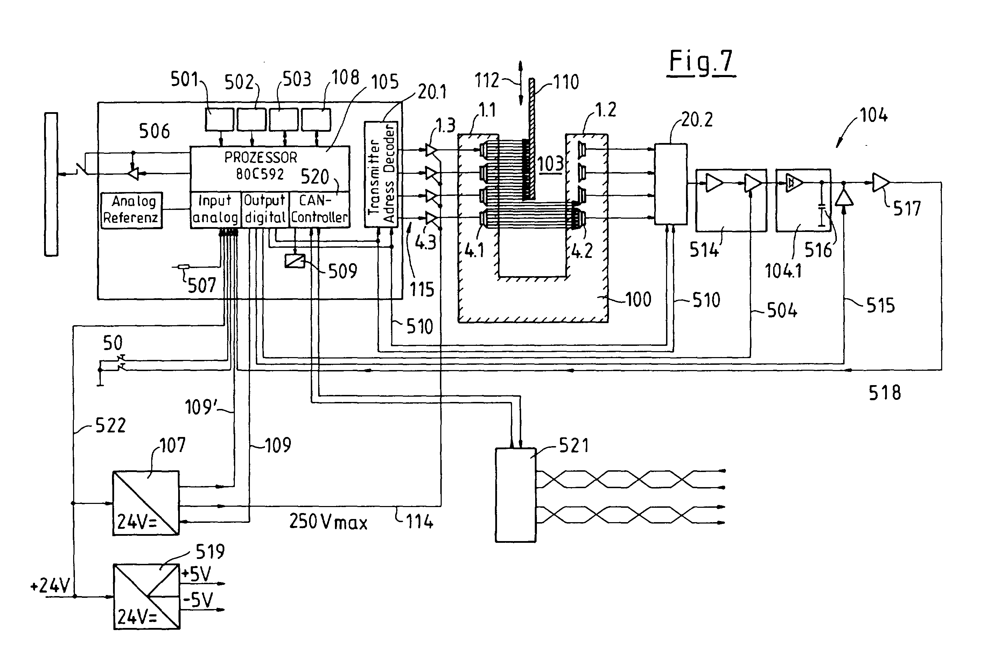

Das Zählwerk 116 besitzt einen von den Gatterbausteinen 119.1, 119.2 unmittelbar geschalteten Vor-/Rückwärtszähler 116.1 und einen davon geschalteten zweiten Vor-/Rückwärtszähler 116.2. Der erste Zähler 116.1 besitzt so viele, nämlich sechs Zählerstände, wie je Sensor k (k = 1 bis 4) Eichkantenlagen vorhanden sind, die gemäß ihrer Reihenfolge im Meßfeld k' (k'=1-4) den Zählerständen zugeordnet sind. Der zweite Zähler 116.2 besitzt so viele, nämlich vier Zählerstände, wie Sensoren vorhanden sind und steuert mit seinen Zählerständen über die Ausgänge 117 und die Leitung C in der schon beschriebenen Weise die Schalteinrichtung 20, was in Fig. 4 durch Vermittlung eines Adressdecoders 20.3, in Fig. 7 über die Leitung 510 erfolgt. Der erste Zähler 116.1 setzt sich bei Überschreitung der Zählerstandsgrenzen in der einen oder anderen Richtung über ein Reset R selbst zurück und schaltet den zweiten Zähler 116.2 um jeweils einen Zählerstand zurück oder vor. Im übrigen steuern beide Zähler 116.1, 116.2 mit ihren jeweiligen Zählerständen über Leitungen 121 einen im Eichdatenspeicher 108 enthaltenen, in Fig. 6 nicht dargestellten Adressdecoder zum Abrufen der zum eingeschalteten Sensor k und zur Eichkantenlage $z_{k,n}$ gehörenden Eichwerte $W_{k,n}$, $S_{k,n}$ in einen Zwischenspeicher 120.

Bewegt sich aus dem Meßfeld k' die aktuelle Kantenlage in das Meßfeld (k-1)', schaltet das Zählwerk 116 vom Sensor k auf den Sensor k-1 um, sobald das Empfangssignal W den Wert Wmax = $W_{k,1}$ + H erreicht. Dabei schaltet nicht nur der zweite Zähler 116.2 um einen Zählerstand zurück, sondern der erste Zähler 116.1 setzt sich auch vom Zählerstand n=1 auf den Zählerstand n=5 zurück entsprechend dem Übergang vom Eichwert $W_{k,1}$ zum Eichwert $W_{k-1,5}$. Bewegt sich anschließend die aktuelle Kantenlage vom Meßfeld (k-1)' wieder in das Meßfeld k' zurück, erfolgt die Sensorumschaltung k-1 nach k erst, wenn das Empfangssignal W auf $W_{k-1,6}$ - H abgenommen hat. Entsprechend erfolgt wieder die Rücksetzung des ersten Zählers 116.1 vom Zählerstand n=5 auf den Zählerstand n=1 entsprechend dem Übergang vom Eichwert $W_{k-1,5}$ zum Eichwert $W_{k,1}$. - Überschreitet die aktuelle Kantenlage im Meßspalt 103 die Eichkantenlage $z_{1,1}$ nach außen, überschreitet der zweite Zähler 116.2 seinen Zählbereich auf der Seite des Zählerstandes k=1 mit dem Ergebnis, daß am Ausgang A1 des Zählers ein die Meßbereichsüberschreitung meldendes Signal entsteht. Ein entsprechendes Signal entsteht am Ausgang A2, wenn die aktuelle Kantenlage die Eichkantenlage $z_{4,6}$ nach innen überschreitet, da dann der zweite Zähler 116.2 seinen Zählbereich am anderen Ende beim Zählerstand k=4 überschreitet.

Im Eichdatenspeicher 108 sind weiter für jeden Sensor k und jede Eichkantenlage $z_{k,n}$ Eichwerte $m_{k,n}$ für einen Proportionalitätsfaktor gespeichert. Diese Eichwerte $m_{k,n}$ bestimmen sich aus

$$m_{k,n} = \frac{S_{k,n+1} - S_{k,n}}{W_{k,n+1} - W_{k,n}}$$

und werden aus den gespeicherten Eichwerten $W_{k,n}$ $S_{k,n}$ für das Empfangssignal und das Fühlerausgangssignal vom Prozessor 105 berechnet. Der Wert S des aktuellen Fühlerausgangssignals ergibt sich dann für eine aktuelle Kantenlage z aus dem Wert W des aktuellen Empfangssignals nach der Gleichung

$$S = S_{k,n} + m_{k,n} * (W - W_{k,n}).$$

Diese Berechnung erfolgt im Rechenwerk 106. Es besitzt ein Subtrahierglied 106.1, dem das aktuelle Empfangssignal W und aus dem Zwischenspeicher 120 der Eichwert $W_{k,n}$ zugeführt wird. Die im Subtrahierglied 106.1 gebildete Differenz $W_{k,n}$ - W wird zusammen mit dem aus dem Zwischenspeicher 120 genommenen Eichwert $m_{k,n}$ für den Proportionalitätsfaktor in einem Multiplizierglied 106.2 multipliziert und das Produkt mit dem Eichwert $S_{k,n}$ aus dem Zwischenspeicher in einem Addierglied 106.3 addiert, was im Ergebnis das aktuelle Fühlersignal S liefert.

Die Kantenlage der Warenbahn wird in sich wiederholenden Meßzyklen von 1 ms Dauer gemessen. Das Zeitdiagramm für einen solchen Meßzyklus zeigt Fig. 8. Zu Beginn t0 werden zunächst die Senderspannung für den aktuellen Sensor eingestellt, wofür die Dauer der Zeitspanne 122 (350 µs) zur Verfügung steht, ferner die aktuelle Sensoradresse gesetzt (Reihe III) und mit dem BLANK-Signal (Reihe V) der aktuelle Sensorempfänger abgeschaltet. Nach der Zeitspanne 122 wird der aktuelle Sensor-Sender mit dem Dirac-Impuls 128 von 5 us Dauer beaufschlagt, so daß er einen Ultraschallwellenimpuls aussendet und die Schallaufzeit beginnt. Bis zum erwarteten Zeitpunkt t1 der Ankunft des Ultraschallwellenimpulses am Sensorempfänger vergeht eine Verzögerungsspanne 127, die von der Weite des Meßspalts 103 im Meßkopf 100 abhängt und bei einer Änderung der Spaltweite entsprechend verstellbar ist. Mit dem Ablauf dieser Verzögerungsspanne 127 wird das BLANK-Signal (Reihe V) aufgehoben und damit der aktuelle Sensorempfänger eingeschaltet. Nach dem Eintreffen des Ultraschallwellenimpulses 123 (Reihe IV), der rasch wieder abklingt, startet nach einer Verzögerungsspanne 124 (etwa 80 µs) die Wandlung des (analogen) elektrischen Sensorsignals in das digitale Empfangssignal, was nach einer weiteren Zeitspanne 125 (etwa 37 µs) beendet ist, so daß anschließend durch den Impuls 126 (Reihe VII) die Ermittlung des aktuellen Fühlerausgangssignals durch das Rechenwerk 106 beginnt. Nach Abschluß dieser Ermittlung wird noch die für den nächsten Meßzyklus gültige Sensoradresse ermittelt und nach Ablauf der Zyklusdauer von 1 ms mit dem nächsten Meßzyklus begonnen.

Zur weiteren Erläuterung des Funktionsschaltbildes in Fig. 7 mögen noch die folgenden Angaben dienen:

Ein Reset-Clock Generator 501 erzeugt einerseits den Einschalt-Reset und andererseits den zentralen Takt mit 16 MHz. Ein Programmspeicher 502 beinhaltet das Steuerprogramm. Ein Datenspeicher 503 enthält temporär gültige Daten sowie eine Kopie der im Eichdatenspeicher 108 gesicherten Eichdaten. Dieser Eichdatenspeicher 108 ist als EEPROM ausgeführt; dort sind außer den Eichwerten $W_{k,n}$, $S_{k,n}$, $m_{k,n}$ auch die im Abgleichlauf ermittelten Eichspannungen abgelegt. Ebenfalls enthalten sind für den Betrieb notwendige Kenndaten wie Device- und Gruppenadressen. Die Daten bleiben bei Spannungsausfall erhalten. Eine Multifunktionsanzeige 505 (gelbe LED's) zeigt je nach Betriebszustand entweder die Device- und Gruppenadresse oder, auf den gesamten Meßbereich des Kantenfühlers normiert, die aktuelle Position der Warenkante im Meßspalt des Meßkopfes 100 an. Mit einer LED-Control 506 kann die Helligkeit der Anzeige beeinflußt werden. Die LED's insbesondere ausschalten zu können, ist besonders für den Einsatz des Kantenfühlers an lichtempfindlicher Ware von Bedeutung. Mit dem Temperaturfühler 507 wird laufend die Betriebstemperatur gemessen, um den Meßzeitpunkt t1 (Fig. 8) der veränderlichen Schallaufzeit anpassen zu können. Multifunktionstaster 508 werden entsprechend dem augenblicklichen Betriebszustand verwendet, um z. B. die Device- und Gruppenadresse einzustellen oder Signale abzugeben, die eine Verlagerung der Warenbahn bewirken. Ein CAN-Bus Indikator 509 liefert online den Status der CAN-Übertragung. Der Prozessor 105 aktiviert über die Leitungen 510 den aktuellen Sensor. Der Analog-Multiplexer 20.2 schaltet den durch die aktuelle Adresse ausgewählten Sensorempfängerkanal auf den Vorverstärker 514 durch. Die Verstärkung dieses zweistufigen Vorverstärkers 514 ist über die Leitung 504 wählbar, um eine Anpassung an verschieden große Empfangssignale, abhängig von der Weite des Meßspaltes 103, zu ermöglichen. Ein CLEAR-Signal auf der Leitung 515 entlädt den Kondensator 516 des Spitzenwertgleichrichters 104.1 bis zum Zeitpunkt des Eintreffens des nächsten Schallwellensignals. Der Impedanzwandler 517 mit hoher Eingangs- und niedriger Ausgangsimpedanz verhindert Rückwirkungen des Prozessoreingangs auf den Ladekondensator 516 des Spitzenwertgleichrichters 104.1, die sonst über die das aufbereitete analoge Sensorsignal führende Leitung 518 stattfinden könnten. Die Sollspannung des Spannungsgenerators 107 für den aktuellen Sensor wird über die Steuerleitung 109 mit einem pulsbreitenmodulierten Signal aus dem Prozessor 105 eingestellt. Die aktuelle Spannung wird über die Leitung 109' vom Prozessor 105 gemessen und überwacht. Die Stromversorgung für Logik- und Analogteil ist mit 519 bezeichnet. Der Prozessor 105 (80 C 592) besitzt einen integrierten CAN-Bus Controller 520, dessen Ein- und Ausgangssignale vom und zum externen CAN-Bus über einen CAN-Driver 521 empfangen bzw. gesendet werden. Die Versorgungsspannung wird vom Prozessor über die Leitung 522 überwacht.

**Patentansprüche**

1. Ultraschall-Kantenfühler zur Erfassung der Kantenlage einer Warenbahn,

   mit mindestens zwei Ultraschallsensoren (1, 2, 3, 4) aus jeweils einem Sensorsender, der kurze Ultraschallwellenimpulse ausstrahlt, und einem Sensorempfänger, der die Ultraschallwellenimpulse aufnimmt,

   wobei jedem Sensor (1, 2, 3, 4) ein eigenes, von den Ultraschallwellenimpulsen auf ihrem Weg vom Sensorsender zum Sensorempfänger durchlaufenes Meßfeld (1', 2', 3', 4') zugeordnet ist und der Sensorempfänger aus den aufgenommenen Ultraschallwellenimpulsen jeweils ein vom Grad der Abdeckung seines Meßfelds durch die Warenbahn (110) abhängendes elektrisches Sensorsignal bildet, und wobei eine Schalteinrichtung (20) vorgesehen ist, die den Sensorsender und den Sensorempfänger jeweils nur eines der Sensoren einschaltet und zur Umschaltung zwischen den Sensoren steuerbar ist,

   ferner mit einem aus dem Sensorsignal des jeweils eingeschalteten Sensors ein digitales Empfangssignal (W) bildenden Signalwandler (104),

   und mit einem Rechenwerk (106), das aus dem Empfangssignal (W) ein der Kantenlage (Z) der Warenbahn (110) zugeordnetes Fühlerausgangssignal (S) berechnet, das zur Steuerung einer

   Bahnführungseinrichtung geeignet ist,

   dadurch gekennzeichnet,

   a) daß das Meßfeld (1', 2', 3', 4') jedes Sensors (1, 2, 3, 4) in Breitenrichtung (112) der Warenbahn (110) durch zwei gedachte Randkantenlagen (1001, 1002 bis 4001, 4002) begrenzt ist, in welchen das Empfangssignal (W) auf der einen Seite des Meßfelds einen maximalen und auf der anderen Seite einen minimalen Grenzwert (Wmax, Wmin) besitzt, und daß die Sensoren eine gegenseitige räumliche Anordnung besitzen, in der diese Meßfelder (1', 2', 3', 4') in Breitenrichtung der Warenbahn lückenlos aneinander gereiht sind,

   b) daß ein vorwärts und rückwärts zählendes Zählwerk (116) vorgesehen ist, das mindestens so viele mögliche Zählerstände besitzt wie Sensoren (1 bis 4) vorhanden sind, wobei die Sensoren in der durch die Reihung ihrer Meßfelder (1' bis 4') bestimmten Reihenfolge den Zählerständen zugeordnet sind, und daß das Zählwerk (116) die Schalteinrichtung (20) für die Sensoren so steuert, daß der dem jeweiligen Zählerstand zugeordnete Sensor eingeschaltet ist,

   c) daß eine Komparatorschaltung (118) vorgesehen ist, die den sich für eine aktuelle Kantenlage (Z) ergebenden Wert (W) des Empfangssignals mit den den Randkantenlagen des eingeschalteten Sensors zugeordneten Grenzwerten (Wmax, Wmin) vergleicht und bei Überschreitung des maximalen bzw. Unterschreitung des minimalen Grenzwertes das Zählwerk (116) vorwärts oder rückwärts auf denjenigen Zählerstand umschaltet, der dem in der Reihung der Meßfelder (1' bis 4') jeweils nächsten Sensor (1 bis 4) zugeordnet ist,

   d) daß ein Eichdatenspeicher (108) vorgesehen ist, in dem für das Empfangssignal (W) in Abhängigkeit vom eingeschalteten Sensor (1 bis 4) und für das Fühlerausgangssignal (S) Eichwerte ($W_{k,n}$, $S_{k,n}$) gespeichert sind, die zu Eichkantenlagen ($z_{k,n}$) gehören, welche für Eichzwecke ausgewählt und über die Meßfelder (1' bis 4') aller Sensoren verteilt sind, und

   e) daß das Rechenwerk (106) mit dem sich für eine aktuelle Kantenlage (Z) ergebenden Wert (W) des Empfangssignals den aktuellen Wert (S) des Fühlerausgangssignals aus den für den eingeschalteten Sensor (1 bis 4) gespeicherten Eichwerten ($W_{k,n}$, $S_{k,n}$) errechnet.

2. Kantenfühler nach Anspruch 1, dadurch gekennzeichnet, daß sich die aneinander gereihten Meßfelder (1' bis 4') jeweils paarweise überschneiden.

3. Kantenfühler nach Anspruch 2, dadurch gekennzeichnet, daß die Randkantenlagen (1001 bis 4002)) für jeden Sensor (1 bis 4)) zugleich Eichkantenlagen ($z_{k,n}$) und daher die zugehörigen Eichwerte ($W_{k,n}$ ) des Empfangssignals gleich den für die Sensorumschaltung maßgeblichen Grenzwerten (Wmax, Wmin) sind.

4. Kantenfühler nach Anspruch 2, dadurch gekennzeichnet, daß sich in jedem Überschneidungsbereich (B) der Meßfelder (1' bis 4') nur eine Eichkantenlage ($Z_{1,6}$, $Z_{2,6}$, $Z_{3,6}$) befindet, zu der zwei Eichwerte ($W_{1,6}$, $W_{2,1}$ bzw. $W_{2,6}$, $W_{31}$ bzw. $W_{3,6}$, $W_{4,1}$) des Empfangssignals gehören, nämlich je eines für die beiden Sensoren, die den sich überschneidenden Meßfeldern zugeordnet sind, und daß diese zwei Eichwerte die Vergleichsgrößen bilden, mit denen je nach eingeschaltetem Sensor die Komparatorschaltung (118) das aktuelle Empfangssignal (W) vergleicht, wobei die Komparatorschaltung (118) eine Schalthysterese besitzt, so daß die für die Sensorumschaltung maßgeblichen Grenzwerte (Wmax, Wmin) sich um jeweils ein Hystereseintervall H von den Eichwerten unterscheiden, also der maximale Grenzwert um den Hystereseintervall H größer und der minimale Grenzwert um den Hystereseintervall H kleiner als der jeweilige Eichwert ist.

5. Kantenfühler nach einem der Ansprüche 1 bis 4, dadurch gekennzeichnet, daß die Komparatorschaltung (118) nur zwei Komparatoreinheiten (118.1, 118.2) mit jeweils zwei Eingängen und einem Ausgang aufweist, daß der eine Eingang jeder Komparatoreinheit mit dem aktuellen Empfangssignal (W) beaufschlagt ist und dem jeweils anderen Eingang einer der Eichwerte ($W_{k,n}$, $W_{k,n+1}$) des Empfangssignals aus dem Eichdatenspeicher (108) aufschaltbar ist, wobei die beiden jeweils aufgeschalteten Eichwerte ($W_{k,n}$, $W_{k,n+1}$) zu in der Reihung der Meßfelder (1' bis 4') aufeinander folgenden Eichkantenlagen ($z_{k,n}$) des jeweils eingeschalteten Sensors gehören, und daß die Ausgänge der beiden Komparatoreinheiten (118.1, 118.2) über zwei Gatterbausteine (119.1, 119,2) verknüpft sind, die das Zählwerk (116) vor- und zurückstellen, wenn das aktuelle Empfangssignal (W) größer als der größere oder kleiner als der kleinere der beiden jeweils aufgeschalteten Eichwerte ($W_{k,n}$, $W_{k,n+1}$) ist.

6. Kantenfühler nach Anspruch 5, dadurch gekennzeichnet, daß ein weiterer, die Ausgänge der Komparatoreinheiten (118.1, 118.2) verknüpfender Gatterbaustein (119.3) vorgesehen ist, der ein das Rechenwerk (106) freischaltendes Signal generiert, wenn das aktuelle Empfangssignal (W) im Intervall zwischen den beiden jeweils aufgeschalteten Eichwerten ($W_{k,n}$, $W_{k,n+1}$) liegt.

7. Kantenfühler nach Anspruch 5 oder 6, dadurch gekennzeichnet, daß das Zählwerk (116) einen von den Gatterbausteinen (119.1, 119.2) unmittelbar geschalteten ersten Vor-/Rückwärtszähler (116.1) und einen davon geschalteten zweiten Vor-/Rückwärtszähler (116.2) aufweist, von welchen der erste Zähler (116.1) so viele Zählerstände besitzt wie je Sensor (k) Eichkantenlagen ($z_{k,n}$) vorhanden sind, die gemäß ihrer Reihenfolge im Meßfeld (k') den Zählerständen zugeordnet sind, und der zweite Zähler (116.2) mit seinen Zählerständen die Schalteinrichtung (20) für die Sensoren (1 bis 4) steuert, wobei der erste Zähler (116.1) bei Überschreitung der Zählerstandsgrenzen sich selbst zurücksetzt und den zweiten Zähler (116.2) um jeweils einen Zählerstand weiterschaltet, und wobei im übrigen beide Zähler (116.1, 116.2) gemäß ihren Zählerständen einen Adressdecoder für den Eichdatenspeicher (108) steuern.

8. Kantenfühler nach Anspruch 7, dadurch gekennzeichnet, daß jedem Sensor (1 bis 4) dieselbe Anzahl von Eichkantenlagen ($z_{k,n}$) zugeordnet ist.

9. Kantenfühler nach einem der Ansprüche 1 bis 8, dadurch gekennzeichnet, daß im Eichdatenspeicher (108) für jeden Sensor (k) und jede Eichkantenlage ($z_{k,n}$) Eichwerte ($m_{k,n}$) für einen Proportionalitätsfaktor gespeichert sind, die den den Eichkantenlagen ($z_{k,n}$) entsprechenden Eichwerten ($W_{k,n}$, $S_{k,n}$) für das Empfangs- bzw. Fühlerausgangssignal zugeordnet sind, und daß sich für eine aktuelle Kantenlage (Z) der Wert (S) des Fühlerausgangssignals aus dem Wert (W) des Empfangssignals nach den Gleichungen

$$S = S_{k,n} + m_{k,n} * (W - W_{k,n})$$

$$m_{k,n} = \frac{S_{k,n+1} - S_{k,n}}{W_{k,n+1} - W_{k,n}}$$

errechnet, worin $W_{k,n}$, $S_{k,n}$ und $W_{k,n+1}$, $S_{k,n+1}$ für den k-ten Sensor die Eichwerte für das Empfangs- bzw. Fühlerausgangssignal in der n-ten und (n+1)-ten Eichkantenlage und $m_{k,n}$ den den Eichwerten $W_{k,n}$, $S_{k,n}$ zugeordneten Eichwert des Proportionalitätsfaktors bedeuten.

10. Kantenfühler nach Anspruch 9, dadurch gekennzeichnet, daß das Rechenwerk (106) ein die Differenz ($W_{k,n}$- W) bildendes Subtrahierglied (106.1), ein das Produkt $m_{k,n} * (W_{k,n}$- W) bildendes Multiplizierglied (106.2) und ein die Summe $S_{k,n} + m_{k,n} * (W - W_{k,n})$ bildendes Addierglied (106.3) aufweist.

11. Kantenfühler nach einem der Ansprüche 1 bis 10, dadurch gekennzeichnet, daß für die Senderspannung der Sensoren (1 bis 4) ein Spannungsgenerator (107) vorgesehen ist, bei dem die Größe der erzeugten Senderspannung verstellbar und auf eine für jeden Sensor eigene Eichspannung einstellbar ist, mit der die von den Sensoren bei freiem Meßfeld (1' bis 4') erzeugten Empfangssingale (W) jeweils gleich groß sind, und daß mit den Sensoren (1 bis 4) zugleich deren Eichspannung umschaltbar sind.

## Claims

1. An ultrasonic edge sensor arrangement for detecting the position of the edge of a web of material, comprising

at least two ultrasonic sensors (1, 2, 3, 4) each comprising a sensor transmitter which emits short ultrasonic wave pulses and a sensor receiver which receives the ultrasonic wave pulses,

wherein associated with each sensor (1, 2, 3, 4) is its own measuring field (1', 2', 3', 4') through which the ultrasonic wave pulses pass on their way from the sensor transmitter to the sensor receiver and the sensor receiver forms from the received ultrasonic wave pulses a respective electrical signal which is dependent on the degree by which its measuring field is covered by the web of material (110) and wherein there is provided a switching device (20) which switches on the sensor transmitter and the sensor receiver of only a respective one of the sensors and which is controllable for switching over between the sensors,

and further comprising a signal converter (104) for forming a digital reception signal (W) from the sensor signal of the respective sensor which is switched on, and

a computing means (106) which computes from the reception signal (W) a sensor arrangement output signal (S) which is associated with the position (Z) of the edge of the web (110) of material and which is suitable for controlling a web guide device,

characterised in that

a) the measuring field (1', 2', 3', 4') of each sensor (1, 2, 3, 4) is limited in the width direction (112) of the web of material (110) by two notional edge positions (1001, 1002 to 4001, 4002) in which the reception signal (W) is of a maximum limit value (Wmax) on the one side of the measuring field and a minimum limit value (Wmin) on the other side, and that the sensors are of a mutual spatial arrangement in which said measuring fields (1', 2', 3', 4') are arranged in a row without gaps in the width direction of the web of material,

b) there is provided an up-counting and down-counting counting means (116) which has at least as many possible counter states as there are sensors (1 to 4), wherein the sensors are associated with the counter states in the sequence determined by the succession of their measuring fields (1' to 4') and that the counting means (116) controls the switching device (20) for the sensors in such a way that the sensor associated with the respective counter state is switched on,

c) there is provided a comparator circuit (118) which compares the value (W) of the reception signal, which occurs for a current edge position (Z), to the limit values (Wmax, Mmin) associated with the edge positions of the switched-on sensor and, if the value exceeds the maximum limit value or is below the minimum limit value respectively switches over the counting means (116) in the upward or downward direction to that counter state which is associated with the sensor (1 to 4) which is respectively next in the succession of the measuring fields (1' to 4'),

d) there is provided a calibration data memory (108) for storing for the reception signal (W) in dependence on the switched-on sensor (1 to 4) and for the sensor arrangement output signal (S) calibration values ($W_{k,n}$ $S_{k,n}$) which belong to calibration edge positions ($Z_{k,n}$) which are selected for calibration values and which are distributed over the measuring fields (1' to 4') of all sensors, and

e) the computing means (106), with the reception signal value (W) which occurs for a current edge position (Z), calculates the current value (S) of the sensor arrangement output signal from the calibration values ($W_{k,n}$, $S_{k,n}$) which are stored for the switched-on sensor (1 to 4).

2. An edge sensor arrangement according to claim 1 characterised in that the measuring fields (1' to 4') which are arranged in series with each other respectively overlap each other in pairs.

3. An edge sensor arrangement according to claim 2 characterised in that the edge positions (1001 to 4002) for each sensor (1 to 4) are at the same time calibration edge positions ($Z_{k,n}$) and therefore the associated calibration values ($W_{k,n}$) of the reception signal are equal to the limit values (Wmax, Wmin) which are crucial for the sensor switching-over operation.

4. An edge sensor arrangement according to claim 2 characterised in that in each overlap region (B) of the measuring fields (1' to 4') there is only one calibration edge position ($Z_{1,6}$, $Z_{2,6}$, $Z_{3,6}$) to which there belong two calibration values ($W_{1,6}$, $W_{2,1}$ and $W_{2,6}$, $W_{31}$ and $W_{3,6}$, $W_{4,1}$ respectively) of the reception signal, more specifically a respective one for the two sensors which are associated with the mutually overlapping measuring fields, and that those two calibration values form the comparison variables to which depending on the switched-on sensor the comparator circuit (118) respectively compares the current reception signal (W), wherein the comparator circuit (118) has a switching hysteresis so that the limit values (Wmax, Wmin) which are crucial for the sensor switching-over operation differ by a respective hysteresis interval H from the calibration values, that is to say the maximum limit value is greater by the hysteresis interval H and the minimum limit value is smaller by the hysteresis interval H than the respective calibration value.

5. An edge sensor arrangement according to one of claims 1 to 4 characterised in that the comparator circuit (118) has only two comparator units (118.1, 118.2) each having two inputs and an output, that the one input of each comparator unit receives the current reception signal (W) and the respective other input can receive one of the reception signal calibration values ($W_{k,n}$, $W_{k,n+1}$) from the calibration data memory (108), wherein the two respectively applied calibration values ($W_{k,n}$, $k_{k,n+1}$) belong to calibration edge positions ($Z_{k,n}$) of the respectively switched-on sensor, which follow each other in the succession of the measuring fields (1' to 4'), and that the outputs of the two comparator units (118.1, 118.2) are linked by way of two gate devices (119.1, 119.2) which set the counting means (116) forward and back when the current reception signal (W) is larger than the larger or smaller than the smaller of the two respectively applied calibration values ($W_{k,n}$, $W_{k,n+1}$).

6. An edge sensor arrangement according to claim 5 characterised in that there is provided a further gate device (119.3) which links the outputs of the comparator units (118.1, 118.2) and which generates a signal for enabling the computing means (106) when the current reception signal (W) is in the interval between the two respectively applied calibration values ($W_{k,n}$, $W_{k,n+1}$).

7. An edge sensor arrangement according to claim 5 or claim 6 characterised in that the counting means (116) has a first up/down counter (116.1) which is switched directly by the gate devices (119.1, 119.2) and a second up/down counter (116.2) which is switched by the first counter, of which the first counter (116.1) has as many counter states as there are per sensor (k) calibration edge positions ($Z_{k,n}$) which are associated in accordance with their sequence in the measuring field (k') with the counter states, and the second counter (116.2) with its counter states controls the switching device (20) for the sensors (1 to 4), wherein when the counter state limits are exceeded the first counter (116.1) resets itself and switches the second counter (116.2) further by a respective counter state, and wherein moreover both counters (116.1, 116.2) in accordance with their counter states control an address decoder for the calibration data memory (108).

8. An edge sensor arrangement according to claim 7 characterised in that the same number of calibration edge positions ($Z_{k,n}$) is associated with each sensor (1 to 4).

9. An edge sensor arrangement according to one of claims 1 to 8 characterised in that stored in the calibration data memory (108) for each sensor (k) and each calibration data position ($Z_{k,n}$) are calibration values ($m_{k,n}$) for a proportionality factor, which are associated with the calibration values ($W_{k,n}$, $S_{k,n}$) corresponding to the calibration edge positions ($Z_{k,n}$), for the reception and sensor arrangement output signals respectively, and that for a current edge position (Z) the value (S) of the sensor arrangement output signal is calculated from the value (W) of the reception signal in accordance with the equations:

$$S = S_{k,n} + m_{k,n} * (W - W_{k,n})$$

$$m_{k,n} = \frac{S_{k,n+1} - S_{k,n}}{W_{k,n+1} - W_{k,n}}$$

wherein $W_{k,n}$, $S_{k,n}$ and $W_{k,n+1}$, $S_{k,n+1}$ for the k-th sensor denote the calibration values for the reception and sensor arrangement output signals respectively in the n-th and (n+1)-th calibration edge position and $m_{k,n}$ denotes the calibration value, associated with the calibration values $W_{k,n}$, $S_{k,n}$, of the proportionality factor.

10. An edge sensor arrangement according to claim 9 characterised in that the computing means (106) has a subtracting member (106.1) forming the difference ($W_{k,n}-W$), a multiplying member (106.2) forming the product $m_{k,n} * (W_{k,n}-W)$, and an adding member (106.3) forming the sum $S_{k,n} + m_{k,n} * (W-W_{k,n})$.

11. An edge sensor arrangement according to one of claims 1 to 10 characterised in that provided for the transmitter voltage of the sensors (1 to 4) is a voltage generator (107) in which the magnitude of the transmitter voltage produced is adjustable and can be set to a calibration voltage which is specific for each sensor, with which the reception signals (W) produced by the sensors in a free magnetic field (1' to 4') are respectively of equal magnitude, and that with the sensors (1 to 4) the calibration voltage thereof can be switched over at the same time.

## Revendications

1. Détecteur de bord à ultrasons pour la détection de la position des bords d'une bande de produit,

> comprenant au moins deux sondes à ultrasons (1, 2, 3, 4) formées chacune d'un émetteur qui émet des impulsions courtes d'ondes ultrasonores et d'un récepteur qui reçoit les impulsions d'ondes ultrasonores,
> un champ de mesure (1', 2', 3', 4') spécifique parcouru par les impulsions d'ondes ultrasonores sur leur chemin de l'émetteur vers le récepteur étant associé à chaque sonde (1, 2, 3, 4), le récepteur de sonde formant chaque fois, à partir des impulsions d'ondes ultrasonores, un signal électrique de sonde, qui dépend du degré de recouvrement de son champ de mesure par la bande de produit (110), et un dispositif de commutation (20) qui active seulement l'émetteur et le récepteur d'une sonde unique étant prévu, lequel dispositif peut être commandé à des fins de commutation entre les différentes sondes,
> le détecteur comprenant encore un convertisseur de signal (104) qui forme un signal de réception numérique (W) à partir du signal de sonde délivré par la sonde en service,
> et un dispositif de calcul (106) qui, à partir du signal de réception (W), calcule un signal de sortie de détecteur (S) associé à la position du bord (Z) de la bande de produit destiné à la commande d'un dispositif de guidage de bande,

> caractérisé par le fait,

> a) que le champ de mesure (1', 2', 3', 4') de chaque sonde (1, 2, 3, 4), dans le sens de la largeur (112) de la bande de produit (110), est délimité par deux positions de bord (1001, 1002 à 4001, 4002) imaginaires, dans lesquelles le signal de réception (W) d'un côté du champ de mesure présente une valeur seuil maximale et de l'autre côté du champ de mesure une valeur seuil minimale (Wmax, Wmin) et que les sondes sont disposées les unes par rapport aux autres dans l'espace de telle sorte que lesdits champs de mesures (1', 2', 3', 4') se succèdent sans vide, dans le sens de la largeur de la bande de produit,
> b) qu'il est prévu un système de compteur-décompteur (116) qui comporte au moins autant de positions de compteur possibles qu'il y a de sondes (1 à 4), les sondes étant associées aux positions de compteur dans l'ordre défini par la succession de leurs champs de mesure (1' à 4') et que le système de compteur-décompteur (116) commande le dispositif de commutation (20) pour les sondes de telle sorte que la sonde associée à la position de compteur concernée soit activée,

c) qu'il est prévu un circuit comparateur (118) qui compare la valeur (W) du signal de réception obtenue pour une position de bord actuelle (Z) aux valeurs seuils (Wmax, Wmin) associées aux positions de bord de la sonde activée et, en cas de dépassement de la valeur maximale ou de la valeur seuil minimale, fait avancer ou reculer le système de compteur-décompteur (116) à la position de compteur qui est associée à la sonde (1 à 4) la plus proche dans la succession des champs de mesure (1' à 4'),

d) qu'il est prévu une mémoire de données d'étalonnage (108) dans laquelle sont mémorisées pour le signal de réception (W), en fonction de la sonde (1 à 4) activée et pour le signal de sortie de détecteur (S), des valeurs d'étalonnage ($W_{k,n}$; $S_{k,n}$) qui correspondent à des positions de bord d'étalonnage ($z_{k,n}$) sélectionnées à des fins d'étalonnage et réparties sur les champs de mesure (1' à 4') de toutes les sondes et

e) que le dispositif de calcul (106), avec la valeur (W) du signal de réception obtenue pour une position de bord (Z) actuelle, calcule la valeur actuelle (S) du signal de sortie de détecteur à partir des valeurs d'étalonnage ($W_{k,n}$, $S_{k,n}$) mémorisées pour la sonde activée.

2. Détecteur de bord selon la revendication 1, caractérisé par le fait que les champs de mesure (1' à 4') disposés les uns à la suite des autres se chevauchent deux à deux.

3. Détecteur de bord selon la revendication 2, caractérisé par le fait que les positions de bord (1001 à 4002) pour chaque sonde (1 à 4) sont également des positions de bord d'étalonnage ($z_{k,n}$) et que de ce fait, les valeurs d'étalonnage ($W_{k,n}$) associées du signal de réception sont identiques aux valeurs seuils (Wmax, Wmin) qui interviennent pour la commutation des sondes.

4. Détecteur de bord selon la revendication 2, caractérisé par le fait qu'il n'y a dans chaque zone de chevauchement (B) des champs de mesure (1' à 4') qu'une position de bord d'étalonnage ($z_{1,6}$, $z_{2,6}$, $z_{3,6}$) à laquelle correspondent deux valeurs d'étalonnage ($W_{1,6}$, $W_{2,1}$ ou $W_{2,6}$, $W_{3,1}$ ou $W_{3,6}$, $W_{4,1}$)

du signal de réception, à savoir une pour chacune des deux sondes associées aux champs de mesure qui se chevauchent, et par le fait que ces deux valeurs d'étalonnage constituent les grandeurs de référence auxquelles le circuit comparateur (118), en fonction de la sonde activée, compare le signal de réception (W), le circuit comparateur (118) présentant une hystérésis de commutation telle, que, les valeurs seuils (Wmax, Wmin) qui interviennent pour la commutation des sondes diffèrent d'un intervalle d'hystérésis H par rapport aux valeurs d'étalonnage, c'est-à-dire que la valeur seuil maximale soit supérieure de l'intervalle d'hystérésis H à la valeur d'étalonnage concernée et la valeur seuil minimale soit inférieure de l'intervalle d'hystérésis H à ladite valeur d'étalonnage.

5. Détecteur de bords selon une des revendications 1 à 4, caractérisé par le fait que le circuit comparateur (118) comporte seulement deux modules comparateurs (118.1, 118.2) avec chacun deux entrées et une sortie, par le fait que l'une des entrées de chacun des modules comparateurs reçoit le signal de réception (W) actuel et que l'autre entrée reçoit une des valeurs d'étalonnage ($W_{k,n'}$, $W_{k,n+1}$) du signal de réception contenu dans la mémoire de données d'étalonnage (108), les deux valeurs d'étalonnage ($W_{k,n'}$, $W_{k,n+1}$) transmises appartenant à des positions de bord d'étalonnage ($z_{k,n}$) consécutives de la sonde activée dans la succession des champs de mesure (1' à 4') et par le fait que les sorties des deux modules comparateurs (118.1, 118.2) sont combinées par l'intermédiaire de deux portes (119.1, 119.2) qui avancent ou reculent le système compteur-décompteur (116) lorsque le signal de réception (W) actuel est supérieur à la plus élevée ou inférieur à la plus faible des deux valeurs d'étalonnage ($W_{k,n'}$, $W_{k,n+1}$) appliquées.

6. Détecteur de bord selon la revendication 5, caractérisé par le fait qu'il est prévu une porte (119.3) supplémentaire qui combine les sorties des modules comparateurs (118.1, 118.2) et génère un signal de libération du dispositif de calcul (106), lorsque le signal de réception actuel (W) est situé dans l'intervalle entre les deux valeurs d'étalonnage ($W_{k,n'}$, $W_{k,n+1}$) appliquées.

7. Détecteur de bord selon la revendication 5 ou 6, caractérisé par le fait que le système compteur-décompteur (116) comporte un premier compteur-décompteur (116.1) qui est déclenché directement par les portes (119.1, 119.2) et un second compteur-décompteur (116.2) commandé par le premier, le premier compteur-décompteur (116.1) comportant des positions de compteur en nombre égal aux positions de bord d'étalonnage ($z_{k,n}$) de chaque sonde (k) qui sont associées aux positions de compteur en fonction de leur ordre dans le champ de mesure (k'), et le second compteur (116.2) commandant par ses positions de compteur le dispositif de commutation (20) pour les sondes (1 à 4), le premier compteur (116.1), lors d'un dépassement des limites de position de compteur effectuant une auto-réinitialisation et avançant le second compteur (116.2) d'une position chaque fois, et les deux compteurs (116.1, 116.2) commandant en fonction de leur position de compteur un codeur d'adresse pour la mémoire de données d'étalonnage (108).

8. Détecteur de bord selon revendication 7, caractérisé par le fait que le même nombre de position de bord d'étalonnage ($z_{k,n}$) est associé à chaque sonde (1 à 4).

9. Détecteur de bord selon une des revendications 1 à 8, caractérisé par le fait que dans la mémoire de données d'étalonnage (108) sont mémorisées, pour chaque sonde (k) et chaque position de bord d'étalonnage ($z_{k,n}$), des valeurs d'étalonnage ($m_{k,n}$) pour un facteur de proportionnalité, qui sont associées aux valeurs d'étalonnage ($W_{k,n}$, $S_{k,n}$) pour le signal de réception ou le signal de sortie de détecteur correspondant aux positions de bords d'étalonnage ($z_{k,n}$) et par le fait que pour une position de bord actuelle (z) la valeur (S) du signal de sortie de détecteur est calculée à partir de la valeur du signal de réception (W) conformament aux équations

$$S = S_{k,n} + m_{k,n} * (W - W_{k,n})$$

$$m_{k,n} = \frac{S_{k,n+1} - S_{k,n}}{W_{k,n+1} - W_{k,n}}$$

$W_{k,n}$, $S_{k,n}$ et $W_{k,n+1}$, $S_{k,n+1}$ représentant les valeurs d'étalonnage pour le signal de réception ou le signal de sortie de détecteur dans la n-ième et la (n+1)-ième position de bord d'étalonnage pour la k-ième sonde et $m_{k,n}$ représentant la valeur d'étalonnage du facteur de proportionnalité associée aux valeurs d'étalonnage $W_{k,n}$, $S_{k,n}$.

10. Détecteur de bord selon la revendication 9, caractérisé par le fait que le dispositif de calcul (106) comporte un soustracteur (106.1) qui forme la différence ($W_{k,n}$-W), un multiplicateur (106.2) qui forme le produit $m_{k,n} * (W_{k,n}$-W) et un addeur (106.3) qui forme la somme $S_{k,n} + m_{k,n} * (W_{k,n}$-W).

11. Détecteur de bord selon une des revendications 1 à 20, caractérisé par le fait qu'il est prévu un générateur de tension (107) pour la tension d'émetteur des sondes (1 à 4), dans lequel la valeur de la tension d'émetteur produite est réglable et peut réglée à une tension d'étalonnage propre pour chaque sonde, pour laquelle les signaux de réception (W) générés par les sondes (1' à 4') avec un champ libre sont égaux et par le fait qu'on commute en même temps que les sondes (1 à 4) la tension d'étalonnage de ceux-ci.

## Fig.1

EP 0 721 907 B1

Fig.2

Fig.3

Fig.4

Fig.5

Fig.6

$$S = S_{k,n} + m_{k,n}(W_{k,n} - W)$$

Fig.7

## Fig.8

EP 0 721 907 B1